# FASCICULE DE BREVET EUROPEEN

(11) **EP 1 482 387 B1**
(45) Date de publication et mention de la délivrance du brevet: **09.04.2008**
(21) Numéro de dépôt: 04102278.1
(22) Date de dépôt: 25.05.2004
(51) Int. Cl.: G05B 19/05

(54) **Système de contrôle d'accès à un équipement d'automatisme**
Zugriff überwachunggssystem für ein Automatisierungsgerät
Access control system for an automation equipment

(30) Priorité: 28.05.2003 FR 0306459
(43) Date de publication de la demande: 01.12.2004
(73) Titulaire: SCHNEIDER ELECTRIC INDUSTRIES SAS, 92500 Rueil-Malmaison (FR)
(72) Inventeur: Brun, Jean-Michel, 38960, Saint Etienne de Crossey (FR); Chiche, Thierry, 38330, Saint Ismier (FR)

(56) Documents cités:
- WO-A-00/49471
- WO-A-00/70531
- WO-A-01/69335
- WO-A-01/86879
- WO-A-02/48809
- DE-A- 10 128 829
- US-A1- 2003 004 952
- PATENT ABSTRACTS OF JAPAN vol. 0080, no. 60 (P-262), 22 mars 1984 (1984-03-22) & JP 58 208861 A (FUJITSU KK), 5 décembre 1983 (1983-12-05)

## Description

La présente invention se rapporte à un système permettant d'assurer le contrôle d'accès à un ou plusieurs équipements d'automatisme connectés à un premier réseau de communication, à partir d'un poste client connecté à un second réseau de communication. L'invention concerne également un procédé de contrôle d'accès à un ou plusieurs équipements d'automatisme.

Sous le terme "équipement d'automatisme", on désignera indifféremment ci-après tout équipement destiné à piloter, surveiller et/ou contrôler tout ou partie d'une application d'automatisme appartenant notamment au domaine des automatismes industriels, des automatismes du bâtiment et du tertiaire ou des automatismes de contrôle/commande des réseaux électriques de distribution. On regroupe donc sous ce terme un automate programmable, une commande numérique, mais aussi tout appareil ou module connectable à un réseau de communication local ou global. On inclura ainsi dans cette définition un coupleur métier ou un module d'entrées/sorties déportées, un terminal de dialogue opérateur, un poste de supervision, un système de gestion technique du bâtiment (GTB), un variateur de vitesse, etc... . Dans le domaine de la distribution électrique, un équipement d'automatisme désigne également une station de contrôle/commande, une centrale de mesures, un relais de protection et de commande, un disjoncteur / contacteur intelligent, etc....

Les architectures réparties sont désormais devenues courantes dans les automatismes et il est donc très fréquent que plusieurs d'équipements d'automatisme soient connectés entre eux par un premier réseau de communication pour former une installation, appelée parfois une cellule d'automatisme. Un tel réseau peut par exemple être basé sur Ethernet et être conforme à la norme TCP/IP ou à la norme UDP/IP mais peut aussi s'appuyer sur des réseaux locaux tels que MODBUS, FIP, CANOpen, CAN, LON, Uni-telway,....

De plus en plus d'équipements d'automatisme intègrent un serveur WEB qui leur permet d'échanger facilement des données les concernant avec tout type de client WEB distant, tel qu'un navigateur installé sur un poste client, connecté au même premier réseau ou à un second réseau de communication, notamment un réseau global du type Intranet, Extranet ou Internet. Ces fonctionnalités sont décrites en particulier dans les documents WO9913418, US6061603 et US5805442. Les données relatives à l'équipement d'automatisme sont alors mises en forme et expédiées par le serveur WEB, par exemple sous forme de pages HTML ou XML, ou présentées par des applets spécifiques.

Cette ouverture aux standards de communication permet à tout point d'un réseau global de pouvoir accéder aisément à une ressource connectée sur ce réseau ou sur un réseau local interconnecté. Or, un équipement d'automatisme exécute habituellement un programme pour piloter, surveiller et/ou contrôler en temps réel tout ou partie d'une application d'automatisme industriel, d'automatisme de bâtiment ou de contrôle/commande de distribution électrique. La sécurité, la disponibilité, la confidentialité et la fiabilité sont donc des critères essentiels au bon fonctionnement de l'application. Il est donc indispensable de garantir une protection sûre des équipements d'automatisme connectés à un réseau de communication contre des accès illicites ou non-autorisés à partir d'un réseau extérieur.

Plusieurs risques graves sont en effet susceptibles de survenir comme l'introduction de différentes formes de virus, la saturation intentionnelle ou non du réseau local entravant la communication entre équipements, la lecture et/ou la modification illicite de programmes, de données et de paramètres propres au fonctionnement de l'application, etc...

Pour prévenir ces risques, il existe déjà des systèmes informatiques dits "pare-feu" (firewall) chargés de protéger les équipements connectés à un premier réseau en filtrant les trames émises à partir d'un second réseau extérieur. Ces systèmes utilisent principalement des critères de sécurité informatiques basés notamment sur les adresses IP de l'expéditeur et du destinataire, sur les numéros de port utilisés côté serveur et côté client, sur des procédures de login et de mots de passe et sur des cryptages d'informations etc.... Typiquement, ces systèmes de type pare-feu (firewall) ou proxy(mandataire) sécurisent des applications informatiques connectées à Internet en fonctionnant par filtrage tout ou rien, c'est-à-dire en se contentant d'interdire ou de laisser passer un service réseau TCP/IP tel que le protocole Web HTTP. Mais aucun d'eux ne permet de protéger efficacement l'accès à une fonction métier exposée par un équipement d'automatisme cible, en n'autorisant que des trames véhiculant une commande et émises par un utilisateur identifié ayant les droits nécessaires à l'exécution de cette commande par l'équipement cible, tout en garantissant que toute trame ne répondant pas à ces critères sera systématiquement rejetée. Seule la prise en compte de critères de filtrages basés sur la notion de profil fonctionnel métier, telle que définie ci-après, permet de mettre en oeuvre une protection optimale et de faciliter considérablement les opérations de configuration et de maintenance, celles-ci pouvant alors être réalisées par des non spécialistes en réseaux et sécurité.

Généralement, il existe en effet plusieurs niveaux (autorisations) permettant d'accéder à un équipement d'automatisme, correspondant à des fonctions métiers différentes. Ces fonctions métiers sont autorisées ou interdites, selon le profil de l'utilisateur qui souhaite l'exécuter. Par exemple, un Agent de maintenance d'une installation peut n'être autorisé qu'à lire certaines données fournies par les équipements de l'installation sans être autorisé à écrire ces données. Un Opérateur de réglage machine peut être autorisé à lire et écrire certains paramètres mais uniquement sur les équipements d'automatisme liés à sa machine. Un Concepteur peut par contre avoir accès à des fonctions de modification du programme application d'un ou plusieurs équipements, de téléchargement de programmes, de téléchargement de firmware.

Différents niveaux d'accès peuvent donc être attribués en fonction :
- du profil de l'utilisateur identifié (c'est-à-dire par exemple : Agent de maintenance, Superviseur, Technicien de mise au point, Ingénieur d'études, ...),
- du ou des équipements auxquels l'utilisateur identifié veut accéder,
- de la fonction métier (c'est-à-dire par exemple : Surveillance, Réglage, Contrôle/commande, Programmation,...) que cet utilisateur est susceptible d'effectuer.

On obtient ainsi un profil fonctionnel qui est propre à un utilisateur ou à un groupe d'utilisateurs et qui définit une liste des fonctions métiers que cet utilisateur ou ce groupe d'utilisateurs pourra être autorisé à effectuer sur tel ou tel équipement de l'installation.

A chaque fonction métier donnée, sur un type d'équipement donné, correspond en réalité un ensemble de requêtes réseaux particulières, ces requêtes pouvant être différentes suivant le protocole de communication utilisé. Il convient donc d'effectuer une association entre d'une part une fonction métier sur un type d'équipement d'automatisme donné et d'autre part la ou les requêtes réseaux correspondantes dans chaque protocole de communication qui permettent d'effectuer cette fonction métier sur ce type d'équipement d'automatisme. On obtient ainsi un profil de filtrage d'un type d'équipement qui contient toutes les requêtes admissibles dans différents protocoles pour effectuer les différentes fonctions métiers supportées par ce type d'équipement.

Il serait donc intéressant de disposer d'un système de contrôle d'accès capable de filtrer automatiquement les trames émises sur un premier réseau de communication à destination d'un ou plusieurs équipements d'automatisme via un second réseau, à partir d'une telle approche basée sur une modélisation fonctionnelle des flux de communication, et non à partir d'une approche purement informatique et réseau qui ne saurait pas distinguer des profils fonctionnels différents utilisant par exemple le même protocole réseau.

A partir du profil fonctionnel de l'utilisateur et du profil de filtrage de l'équipement d'automatisme destinataire, le système sera alors capable de filtrer toute trame à destination d'un équipement d'automatisme connecté au second réseau, en garantissant, à l'aide de ces critères fonctionnels, que seules les trames autorisées seront transmises à l'équipement destinataire.

Pour cela, l'invention décrit un système de contrôle d'accès à un ou plusieurs équipements d'automatisme connectés à un premier réseau de communication à partir d'au moins un poste client connecté à un second réseau de communication. Le système comporte des moyens d'identification d'au moins un utilisateur du poste client, des moyens de détermination d'un profil fonctionnel contenant une liste de fonctions métiers que l'utilisateur identifié est autorisé à effectuer sur le ou les équipements, des moyens d'analyse du contenu d'une trame émise sur le second réseau par l'utilisateur identifié, afin de déterminer, dans ladite trame, une requête et un équipement d'automatisme destinataire, des moyens de définition d'un profil de filtrage de l'équipement destinataire, contenant, pour chaque fonction métier, une liste de requêtes recevables par l'équipement destinataire, et des moyens de filtrage capables d'autoriser ou d'interdire la transmission sur le premier réseau de la trame émise, en fonction du contenu de ladite trame, du profil fonctionnel de l'utilisateur identifié et du profil de filtrage de l'équipement destinataire.

Selon une caractéristique, le système utilise des bibliothèques de profils fonctionnels et de profils filtrage qui sont accessibles par le système et qui sont décrits dans des fichiers en langage XML, de façon à les rendre facilement compréhensible.

Selon une autre caractéristique, le système est implanté dans un appareil informatique connecté au premier et au second réseau.

L'invention décrit également un procédé de contrôle d'accès à un ou plusieurs équipements d'automatisme mis en oeuvre dans un tel système.

Grâce à l'invention, un administrateur de l'installation pourra facilement établir des règles de filtrage pour sécuriser l'accès aux équipements d'automatisme connectés au second réseau, sans connaissance particulière ni des réseaux informatiques, ni des techniques de sécurisation réseaux, ni des choix techniques d'implémentation des fonctions métiers dans les équipements, mais à partir de critères fonctionnels beaucoup plus proches du monde des automatismes, tels que : métier de l'utilisateur / profil fonctionnel associé (fonctions métiers accessibles) / type d'équipement visé / profil de filtrage de l'équipement visé (requêtes autorisées). L'exploitation, la maintenance et les évolutions d'un tel système seront alors grandement simplifiées, puisque la mise en oeuvre de l'invention n'impose aucune modification dans les équipements d'automatisme de l'installation. De plus, le système pourra supporter sans difficulté un grand nombre de protocoles de communication différents, pouvant être basé sur Ethernet/IP ou non, en particulier des protocoles possédant une couche application (couche 7 du modèle OSI) orientée automatisme, du type MODBUS (par exemple : MODBUS sur TCP/IP, MODBUS sur liaison série, MODBUS sur réseau CAN).

D'autres caractéristiques et avantages vont apparaître dans la description détaillée qui suit en se référant à un mode de réalisation donné à titre d'exemple et représenté par les dessins annexés sur lesquels :
- la figure 1 représente un exemple d'une architecture comprenant un système de contrôle d'accès conforme à l'invention,
- la figure 2 détaille différents éléments d'un appareil informatique intégrant le système de contrôle d'accès.

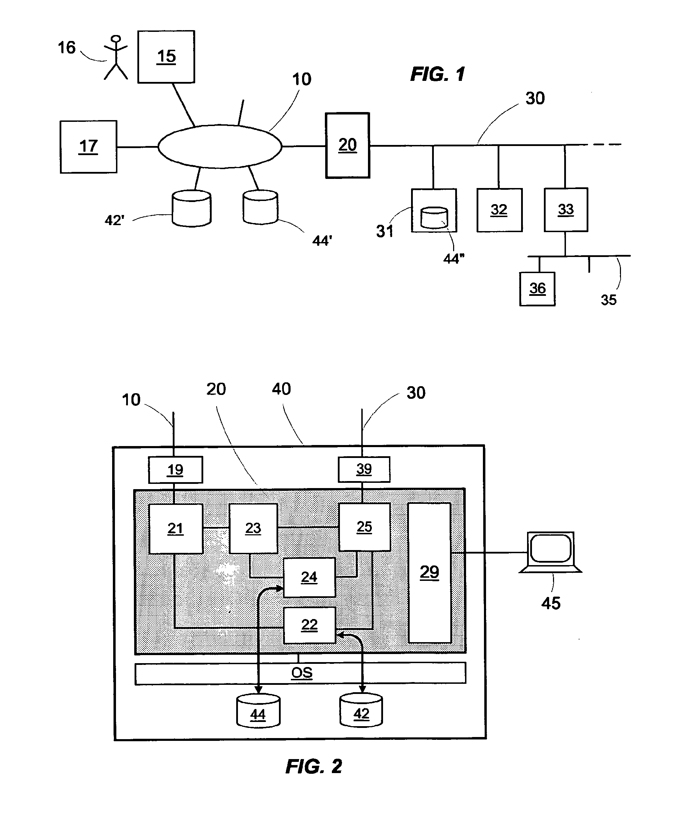

L'architecture de la figure 1 montre une installation composée de plusieurs équipements d'automatisme 31,32,33 reliés à un premier réseau de communication 30. Dans l'exemple de la figure 1, ce premier réseau de communication 30 peut être un réseau local d'automatisme. Il est basé par exemple sur Ethernet au niveau de la couche liaison 2 OSI et est conforme à la norme TCP/IP et à la norme UDP/IP, c'est-à-dire un réseau IP. Le réseau local 30 peut aussi comporter une couche application 7 OSI conforme à un protocole d'automatisme du type MODBUS, UNI-TE, etc....

Un équipement d'automatisme connecté au premier réseau 30 peut être amené à échanger des informations sur un second réseau de communication 10 au travers d'un système de contrôle d'accès 20 qui est relié à la fois au premier réseau 30 et au second réseau de communication 10. Le second réseau 10 est préférentiellement un réseau de type global comme Intranet, Extranet, Internet conforme à la norme TCP/IP et à la norme UDP/IP (réseau IP) ou un réseau de type RTC, RNIS, GSM, ADSL... Plusieurs postes peuvent évidemment être raccordés au second réseau 10, comme un poste utilisateur 15, du type ordinateur PC, un serveur d'applications 17 ou autres (serveur de gestion de production, de gestion de maintenance,...).

En référence à la figure 2, le système de contrôle d'accès 20 est implanté dans un appareil informatique 40 (par exemple de type PC, modem, équipement dédié, ...) qui comporte une unité centrale fonctionnant sous un système d'exploitation OS (Operating System), tel que le système d'exploitation Linux. L'appareil informatique 40 est raccordé au second réseau 10 au travers d'une interface réseau 19, et au premier réseau 30 au travers d'une interface réseau 39. Il effectue la fonction de routeur ou de bridge entre les deux réseaux 10,30. Il peut également comporter une mémoire de stockage, de type disque dur, mémoire flash ou autres, pour sauvegarder en particulier des bibliothèques 42,44 (voir plus loin) ou bien les informations relatives aux demandes d'accès et à leur traitement (acceptation ou rejet de la trame). Le système de contrôle d'accès 20 peut être implanté soit dans un appareil informatique 40 spécifique dédié à cette tâche, soit dans un appareil 40 susceptible d'effectuer également d'autres tâches mais disposant des ressources suffisantes pour exécuter le système de contrôle d'accès 20.

Le système de contrôle d'accès 20 est chargé de filtrer les trames qui sont émises par un utilisateur 16 sur le second réseau 10, dans le but d'échanger des informations avec un ou plusieurs des équipements d'automatisme 31,32,33 connectés directement ou indirectement au premier réseau 30. L'utilisateur 16 opère à partir d'un poste client 15 quelconque connecté au second réseau 10, en utilisant un logiciel client standard, tel qu'un navigateur WEB, ou un logiciel de supervision, un logiciel de programmation et de mise au point d'un équipement d'automatisme, ou tout autre logiciel dédié.

Selon l'invention, le système 20 comporte d'abord des moyens d'identification 21 permettant d'identifier au moins un utilisateur 16 d'un poste client 15. L'utilisateur 16 peut être identifié soit par une méthode classique de Login / Logout à l'aide d'un Nom (Username) et d'un Mot de passe (Password), soit par un certificat électronique. Dans le cas où le second réseau 10 est un réseau IP (Internet Protocol), on utilise préférentiellement un protocole de sécurisation des sessions de communication, de type SSL (Secure Socket Layer), standardisée par l'IETF (Internet Engineering Task Force), de façon à améliorer la confidentialité et l'intégrité des informations échangées lors de la phase d'authentification. On peut également utiliser des services de sécurité proposés par IPSec pour encapsuler les trames échangées.

Pour valider l'identification d'un utilisateur 16, les moyens d'identification 21 vérifient la conformité des informations reçues (Nom + Mot de passe ou informations contenues dans le certificat électronique) par rapport à une liste d'utilisateurs authentifiés, préalablement enregistrée. Cette liste d'utilisateurs authentifiés est accessible au système 20 soit parce qu'elle est mémorisée dans la mémoire de stockage de l'appareil 40, soit parce qu'elle est mémorisée dans un serveur extérieur connecté au second réseau 10 au travers d'une adresse URL, URI ou IP ou sur un serveur LDAP par exemple.

Le système 20 comporte ensuite des moyens de détermination 22 d'un profil fonctionnel de l'utilisateur identifié 16. Le profil fonctionnel d'un utilisateur comprend la liste des fonctions métiers que cet utilisateur est autorisé à effectuer sur différents équipements d'automatisme connectés au premier réseau 30.

Plusieurs fonctions métiers peuvent être envisagées :
- la fonction "Surveillance" qui permet de lire les données relatives aux équipements ou au process géré par les équipements,
- la fonction "Contrôle/commande" qui permet de lire et écrire les données relatives aux équipements ou au process géré par les équipements,
- la fonction "Programmation" qui permet de paramétrer les équipements ou de visualiser et modifier le programme application des équipements.

Il est clair que d'autres fonctions métiers supplémentaires, délivrant d'autres droits distincts, peuvent être facilement définies dans le cadre de l'invention, suivant les besoins de telle ou telle installation. Ainsi, on pourrait créer la fonction "Réglage moteurs" qui permettrait de lire et d'écrire certains paramètres de réglage seulement correspondant à une zone mémoire identifiée dans un type d'équipement d'automatisme donné (notamment dans des variateurs de vitesse).

Dans le profil fonctionnel d'un utilisateur 16 donné, chaque équipement d'automatisme 31,32,33 peut être associé à aucune, à une ou à plusieurs fonctions métiers distinctes. Par exemple, un utilisateur 16 peut être autorisé à effectuer la fonction Surveillance sur l'équipement 31, la fonction Programmation sur l'équipement 32 et aucune fonction sur l'équipement 33. De même, un utilisateur peut être autorisé à effectuer plusieurs fonctions métiers différentes sur un même équipement.

Les moyens de détermination 22 viennent sélectionner le profil fonctionnel de l'utilisateur identifié 16, à partir d'une ou plusieurs bibliothèques 42,42' contenant les profils fonctionnels de l'ensemble des utilisateurs enregistrés. La ou les bibliothèques 42,42' sont accessibles par le système 20 soit en étant directement mémorisée dans la mémoire de stockage de l'appareil 40 (voir fig.2, bibliothèque 42), soit en étant accessible, par exemple via une adresse URL, URI ou IP, dans un serveur extérieur connecté au second réseau 10 (voir fig.1, bibliothèque 42') ou au premier réseau 30.

L'invention prévoit aussi la possibilité de définir un profil fonctionnel non pas pour un utilisateur particulier mais pour un groupe d'utilisateurs. En effet, pour simplifier la mise en oeuvre et l'administration du système de contrôle d'accès 20, on peut introduire la notion de groupe d'utilisateurs qui se définit par un profil fonctionnel identique pour tous les utilisateurs de ce groupe. Par exemple, un groupe "Opérateurs" aurait accès à la fonction Surveillance de tout ou partie des équipements 31,32,33, un groupe "Ingénieurs d'étude" aurait accès à la fonction Programmation pour les équipements de type automate programmable seulement, un groupe "Superviseurs" aurait accès à la fonction Contrôle/commande des équipements, etc... Dans ce cas, un utilisateur identifié 16 est alors défini comme appartenant à un groupe d'utilisateurs ce qui lui donne automatiquement un profil fonctionnel donné. De même, l'invention prévoit la possibilité d'associer un profil fonctionnel utilisateur donné à un groupe d'équipements et non à un équipement particulier.

Le système 20 comporte ensuite des moyens d'analyse 23 du contenu des trames émises sur le second réseau 10. Ces moyens d'analyse 23 doivent notamment permettre de reconnaître, dans une trame émise "t", un équipement destinataire Dt. Si le second réseau 10 et le premier réseau 30 sont des réseaux IP, alors l'équipement destinataire Dt peut être identifié dans la trame t grâce à son adresse IP. Quand l'équipement destinataire Dt est effectivement un des équipements 31,32,33, les moyens d'analyse 23 vont alors associer à cet équipement destinataire Dt un type d'équipement donné. Un type d'équipement représente une famille d'équipements d'automatisme ayant des caractéristiques communes au niveau de ses échanges de communication (par exemple : un type de variateur de vitesse, un type de coupleur réseau d'automate programmable, un type de relais de protection, etc...). L'appartenance d'un équipement d'automatisme 31,32,33 à un type d'équipement donné est configurée par le système 20.

Les moyens d'analyse 23 sont également capables d'identifier le protocole de communication Pt ainsi que la requête Rt utilisés dans la trame t. Si le second réseau 10 et le premier réseau 30 sont des réseaux IP, le protocole Pt est alors déterminé par le N° de port TCP/UDP (par exemple : port 80 pour le protocole HTTP, port 20,21 pour le protocole FTP, port 502 pour le protocole MODBUS, etc...). Dans l'exemple du protocole MODBUS, les moyens d'analyse 23 identifient d'abord le port 502, puis doivent analyser le contenu de la trame t au niveau 7 OSI pour identifier la requête Rt associée à cette trame t.

Cette analyse de la trame t au niveau applicatif (couche 7 OSI) permet de distinguer le type de requête Rt au sein du protocole d'automatisme (MODBUS, CANOpen,...) ou informatique (HTTP, FTP, SNMP,...) et ainsi d'interdire ou d'autoriser cette requête en fonction du profil fonctionnel associé de l'utilisateur. Dans l'exemple d'une fonction métier de type Surveillance associé à un équipement supportant les protocoles MODBUS et FTP, l'invention permet ainsi d'interdire les requêtes d'écriture MODBUS (modification de données dans l'équipement) et les requêtes d'écriture FTP (écriture d'un fichier de paramètres sur l'équipement via FTP), mais par contre d'autoriser les requêtes de lecture MODBUS et de lecture FTP nécessaires à la fonction métier Surveillance de l'équipement.

Cette granularité d'analyse permet à l'invention de pouvoir filtrer encore plus finement le protocole de communication et notamment, dans le cas du protocole MODBUS, d'analyser les plages d'adresse des données de l'équipement concerné par les requêtes de lecture ou d'écriture : l'invention pourrait alors autoriser ou interdire une lecture ou une écriture MODBUS seulement sur certaines données spécifiques de l'équipement.

De nombreux protocoles de communication, notamment les protocoles du WEB : HTTP, FTP, SNMP, SMTP ou des protocoles orientés automatisme : MODBUS, UNI-TE, CAN, CANOpen ou autres peuvent être envisagés dans l'invention.

Le système 20 comporte ensuite des moyens de définition 24 d'un profil de filtrage de l'équipement destinataire Dt qui a été identifié dans la trame t par les moyens d'analyse 23. Le profil de filtrage d'un équipement d'automatisme contient la liste des requêtes qui sont recevables pour ce type d'équipement, comme indiqué dans l'exemple du tableau 1 ci-après, pour chaque fonction métier et pour chaque protocole de communication. En effet, il est fréquent que des requêtes différentes s'appuyant sur des protocoles différents permettent de réaliser l'exécution d'une même fonction métier sur un équipement cible (par exemple la modification d'un paramètre d'un équipement cible peut être réalisée par l'émission d'une requête MODBUS, HTTP ou SNMP).

Lorsqu'un utilisateur 16 veut, à partir d'un poste client 15, effectuer une fonction métier sur un type d'équipement déterminé, cela se traduit par la possibilité d'émettre une ou plusieurs requêtes (par exemple des requêtes de type : READ INPUT STATUS, READ OUTPUT STATUS, WRITE SINGLE REGISTER, etc...) s'appuyant sur un ou plusieurs protocoles et exécutables par ce type d'équipement. En conséquence, pour contrôler l'accès à un équipement d'automatisme, le système 20 doit être capable de reconnaître la requête Rt émise dans une trame t et vérifier que cette requête Rt correspond bien à une fonction métier autorisée et mise en oeuvre par l'équipement.

Il existe donc une ou plusieurs bibliothèques 44,44',44" contenant les profils de filtrage des différents types d'équipement d'automatisme et qui permettent de définir, pour chaque type d'équipement, la liste des requêtes autorisées correspondant à chaque fonction métier. Cette liste de requêtes appartient à un ou plusieurs protocoles de communication. La ou les bibliothèques 44,44',44" sont accessibles par le système 20 soit en étant mémorisée dans la mémoire de stockage de l'appareil 40 (voir fig.2, bibliothèque 44), soit mémorisée, par exemple via une adresse URL, URI ou IP, dans un serveur extérieur accessible par le système 20 via le second réseau 10 (voir fig.1, bibliothèque 44'), soit mémorisée directement dans un équipement destinataire Dt lui-même (voir fig.1, bibliothèque 44") accessible par le système 20 via le premier réseau 30.

Ainsi, une fois que les moyens d'analyse 23 ont identifié le type de l'équipement d'automatisme destinataire Dt de la trame t, les moyens de définition 24 définissent aisément le profil de filtrage correspondant au type de cet équipement d'automatisme destinataire Dt.

Préférentiellement, les profils fonctionnels et les profils de filtrage sont décrits dans des fichiers en langage XML, ce qui les rend compatibles avec les standards du WEB et facilement modifiables à partir de tout éditeur XML. Le tableau 1 montre un exemple simplifié de profil de filtrage de la fonction métier "MONITORING" ("SecurityProfile"), pour un type d'équipement d'automatisme "TSX_ETY510" ("DeviceType") et pour les protocoles de communication MODBUS et FTP ("Protocol Name"). Dans ce tableau 1, le protocole MODBUS correspond au numéro de port 502 ("Function IPPort") et les codes requêtes ("FunctionCode") autorisés pour la fonction métier "MONITORING" sont les codes "08" et "7E". Pour le protocole FTP, tous les codes de requêtes (désignés en l'occurrence par le signe "*") correspondant au port n°20 sont autorisés pour effectuer la fonction métier "MONITORING" sur le type d'équipement d'automatisme "TSX_ETY510". Par contre, seuls les codes requêtes "0", "1 ", "3" et "6" sont autorisés pour le port n°21 pour effectuer la fonction métier "MONITORING" sur le type d'équipement "TSX_ETY510".

Le tableau 1 montre de plus un niveau supplémentaire dans l'analyse de certaines requêtes, puisque le code requête "08" du protocole MODBUS n'est autorisé qu'en association avec les codes de sous-requêtes "01" et "02" ("SubFunction subcode"), ce qui entraîne que les moyens d'analyse 23 sont capables de déterminer la requête et la sous-requête contenue dans une trame t si nécessaire. Cette fonctionnalité optionnelle prévue dans l'invention permet de cibler encore mieux les profils de filtrage du système de contrôle 20 et donc de faire un filtrage plus précis des trames émises sur le second réseau 10.

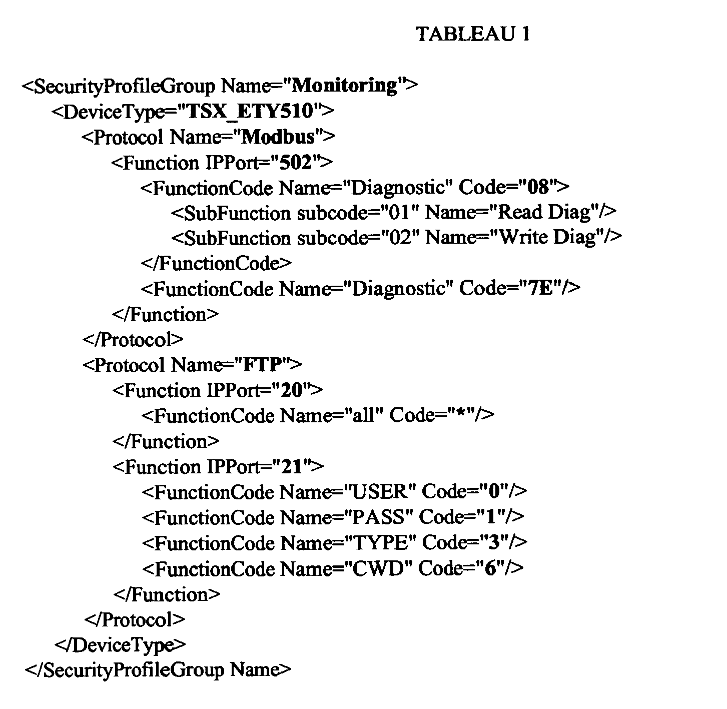

Le système 20 comporte enfin des moyens de filtrage 25 qui sont capables d'interdire ou d'autoriser la transmission sur le premier réseau 30 de la trame t émise à partir du second réseau 10. Pour cela, les moyens de filtrage 25 utilisent le profil fonctionnel de l'utilisateur identifié 16 et le profil de filtrage de l'équipement d'automatisme destinataire Dt. Ils vérifient que la trame t contient bien une requête Rt qui est répertoriée dans le profil de filtrage de l'équipement destinataire Dt et que cette requête Rt correspond bien à une fonction métier autorisée dans le profil fonctionnel de l'utilisateur identifié 16. Si c'est le cas, la trame t est transmise normalement à l'équipement destinataire Dt via l'interface 39. Sinon, la trame t n'est pas transmise. Ainsi, le système 20 est capable de contrôler l'accès à tout équipement d'automatisme raccordé au premier réseau 30 à partir de critères fonctionnels.

Une fonctionnalité permet d'augmenter la sécurité de l'accès aux équipements d'automatisme en évitant le maintien d'une session ouverte non-utilisée. Les moyens de filtrage 25 sont en effet capables de mesurer un temps d'inactivité Ti propre à chaque utilisateur identifié 16. Ce temps Ti est initialisé à une valeur nulle au moment de l'identification de l'utilisateur 16, ainsi qu'à chaque fois que le système 20 reçoit, en provenance de cet utilisateur 16, une trame t autorisée à destination d'un des équipements d'automatisme 31,32,33. Si le temps d'inactivité Ti reste en deçà d'un temps maximum d'inactivité Tmax, le fonctionnement du système 20 reste inchangé. Si le temps d'inactivité Ti devient supérieur à Tmax, alors tout échange entre l'utilisateur 16 et un des équipements est interdit. L'utilisateur 16 doit à ce moment-là s'identifier de nouveau (Login) pour pouvoir recommencer des échanges. Le temps maximum d'inactivité Tmax peut être fixé par configuration soit individuellement pour un utilisateur, soit pour un groupe d'utilisateurs, soit pour une fonction métier.

Selon une variante présentée en figure 1, l'installation comporte un réseau local supplémentaire 35 sur lequel est raccordé un équipement d'automatisme 36. Un des équipements d'automatisme, en l'occurrence l'équipement 33, est alors connecté simultanément aux réseaux 30 et 35. Il sert donc de passerelle entre le premier réseau 30 et le réseau local supplémentaire 35 (un équipement de type automate programmable peut être susceptible de remplir cette fonctionnalité).

Si le réseau supplémentaire 35 est un réseau IP, alors l'équipement d'automatisme 36 peut être identifié par son adresse IP ou son adresse MAC et être intégré au fonctionnement du système 20 de la même façon que les équipements 31,32,33. Si le réseau supplémentaire 35 n'est pas un réseau IP mais est par exemple un bus de terrain de type maître/esclave dont l'équipement 33 est le maître, alors lorsque le système 20 identifiera une trame t dont le destinataire est l'adresse IP de l'équipement 33, les moyens d'analyse 23 devront identifier dans la trame t non seulement la requête Rt mais également l'esclave destinataire de la requête Rt avant de pouvoir autoriser ou interdire la transmission de la trame.

Par ailleurs, le système 20 comporte avantageusement des moyens d'administration 29 qui lui permettent d'être configuré facilement par un administrateur par exemple à partir d'une interface homme/machine 45 connecté à l'appareil 40. On peut aussi envisager de façon équivalente que les moyens d'administration 29 soient implantés dans une autre machine informatique et que la configuration du système 20 s'effectue via le second réseau 10 à travers une interface WEB sécurisée par HTTPS.

L'administrateur peut configurer l'ensemble du système 20. Il peut notamment à tout moment modifier/ajouter/supprimer en ligne des utilisateurs, des profils fonctionnels d'utilisateurs, des profils de filtrage, des fonctions métiers, des types d'équipements d'automatisme, des protocoles de communication supportés par le système 20, etc... Grâce à l'invention, l'administrateur est ainsi capable de mettre en place un contrôle d'accès extrêmement précis et personnalisé des équipements d'automatisme d'une installation, sans compétences particulières dans les technologies de l'informatique, mais simplement à partir de critères fonctionnels liés aux métiers des automatismes. La mise en oeuvre et la gestion d'un système "pare-feu" dédié à des équipements d'automatisme connectés à un réseau ouvert s'en trouve alors grandement simplifié.

Il est bien entendu que l'on peut, sans sortir du cadre de l'invention, imaginer d'autres variantes et perfectionnements de détail et envisager de même l'emploi de moyens équivalents.

## Revendications

1. Système de contrôle d'accès à un ou plusieurs équipements d'automatisme (31,32,33) connectés à un premier réseau de communication (30), à partir d'au moins un poste client (15) connecté à un second réseau de communication (10), **caractérisé en ce que** le système (20) comporte :
- des moyens d'identification (21) d'au moins un utilisateur (16) du poste client (15),
- des moyens de détermination (22) d'un profil fonctionnel contenant une liste de fonctions métiers que l'utilisateur identifié (16) est autorisé à effectuer sur le ou les équipements d'automatisme (31,32,33),
- des moyens d'analyse (23) du contenu d'une trame émise sur le second réseau (10) par l'utilisateur identifié (16), afin de déterminer, dans ladite trame, une requête et un équipement d'automatisme destinataire,
- des moyens de définition (24) d'un profil de filtrage de l'équipement d'automatisme destinataire, contenant, pour chaque fonction métier, une liste de requêtes recevables par l'équipement destinataire,
- des moyens de filtrage (25) capables d'autoriser ou d'interdire la transmission sur le premier réseau (30) de ladite trame émise, en fonction du contenu de ladite trame, du profil fonctionnel de l'utilisateur identifié (16) et du profil de filtrage de l'équipement destinataire.

2. Système de contrôle d'accès selon la revendication 1, **caractérisé en ce que** les moyens de détermination (22) d'un profil fonctionnel utilisent au moins une bibliothèque de profils fonctionnels (42,42') accessible par le système (20).

3. Système de contrôle d'accès selon la revendication 1 ou 2, **caractérisé en ce que** les moyens de définition (24) d'un profil de filtrage utilisent au moins une bibliothèque de profils de filtrage (44,44',44") accessible par le système (20) et donnant, pour un type d'équipement d'automatisme déterminé et pour une fonction métier déterminée, une liste de requêtes autorisées appartenant à un ou plusieurs protocoles de communication.

4. Système de contrôle d'accès selon la revendication 3, **caractérisé en ce que** la bibliothèque de profils de filtrage comprend des requêtes appartenant à plusieurs protocoles de communication choisis dans une liste composée de HTTP, FTP, SNMP, MODBUS, UNI-TE, CANOpen, CAN, LON.

5. Système de contrôle d'accès selon l'une des revendications précédentes, **caractérisé en ce que** le premier réseau de communication (30) est un réseau IP.

6. Système de contrôle d'accès selon l'une des revendications précédentes, **caractérisé en ce que** le second réseau de communication (10) est un réseau IP.

7. Système de contrôle d'accès selon la revendication 6, **caractérisé en ce que** le second réseau de communication (10) est un réseau de type Intranet, Extranet ou Internet.

8. Système de contrôle d'accès selon l'une des revendications précédentes, **caractérisé en ce que** les fonctions métiers sont choisies dans une liste composée des fonctions surveillance, contrôle/commande, programmation d'un équipement d'automatisme.

9. Système de contrôle d'accès selon l'une des revendications précédentes, **caractérisé en ce que** les profils fonctionnels et les profils de filtrage sont décrits en langage XML.

10. Système de contrôle d'accès selon l'une des revendications précédentes, **caractérisé en ce que** le système (20) utilise un protocole de sécurisation des sessions de communication, de type SSL.

11. Système de contrôle d'accès selon l'une des revendications précédentes, **caractérisé en ce que** les moyens de filtrage (25) mesurent un temps d'inactivité pour un utilisateur identifié (16) et interdisent la transmission sur le premier réseau de communication (30) d'une trame émise par ledit utilisateur identifié (16), au bout d'un temps maximum d'inactivité prédéterminé (Tmax).

12. Système de contrôle d'accès selon l'une des revendications précédentes, **caractérisé en ce que** le système (20) est implanté dans un appareil informatique (40) connecté au premier réseau (30) et au second réseau (10).

13. Système de contrôle d'accès selon la revendication 12, **caractérisé en ce que** l'appareil informatique (40) comporte une mémoire interne de stockage d'au moins une bibliothèque de profils fonctionnels (42) et d'au moins une bibliothèque de profils de filtrage (44).

14. Système de contrôle d'accès selon la revendication 12, **caractérisé en ce que** le système comprend des moyens d'administration (29) du système (20) accessibles à partir d'une interface homme/machine (45) connectée à l'appareil informatique (40).

15. Procédé de contrôle d'accès à un ou plusieurs équipements d'automatisme (31,32,33) connectés à un premier réseau de communication (30), à partir d'au moins un poste client (15) connecté à un second réseau de communication (10), **caractérisé en ce que** le procédé comporte :
- une étape d'identification d'au moins un utilisateur (16) du poste client (15),
- une étape de détermination d'un profil fonctionnel contenant une liste de fonctions métiers que l'utilisateur identifié (16) est autorisé à effectuer sur le ou les équipements d'automatisme (31,32,33),
- une étape d'analyse du contenu d'une trame émise sur le second réseau de communication (10) par l'utilisateur identifié (16), afin de déterminer, dans ladite trame, une requête et un équipement d'automatisme destinataire,
- une étape de définition d'un profil de filtrage de l'équipement d'automatisme destinataire, contenant, pour chaque fonction métier, une liste de requêtes recevables par l'équipement d'automatisme destinataire,
- une étape de filtrage permettant d'autoriser ou d'interdire la transmission sur le premier réseau de communication (30) de ladite trame émise, en fonction du contenu de ladite trame, du profil fonctionnel de l'utilisateur identifié (16) et du profil de filtrage de l'équipement d'automatisme destinataire.

## Claims

1. System for controlling access to one or several automation equipments (31,32,33) connected to a first communication network (30), from at least one client station (15) connected to a second communication network (10), wherein the system comprises:
- identification means (21) for identifying at least one user (16) of the client station (15),
- determination means (22) for determining a functional profile of the identified user (16) containing a list of business functions that the identified user (16) is authorised to carry out on the automation equipment (31,32,33),
- analysis means (23) for analysing the content of a frame sent on the second network (10) by the identified user (16), in order to determine in said frame a request and a destination automation equipment,
- definition means (24) for defining a filter profile for the destination automation equipment, containing a list of requests that said destination equipment is capable of receiving, for each business function,
- filter means (25) for authorising or prohibiting transmission of said sent frame on the first network (30), according to said sent frame, said functional profile of the identified user (16) and said filter profile of the destination automation equipment.

2. Access control system according to claim 1, wherein the determination means (22) of a functional profile use at least one functional profiles library (42,42') accessible to the system (20).

3. Access control system according to either claim 1 or 2, wherein the definition means (24) use at least one filter profiles library (44,44',44") accessible to the system (20) and containing a list of authorised requests belonging to one or several communication protocols, for a given type of automation equipment and for a given business function.

4. Access control system according to claim 3, wherein the filter profiles library comprises requests belonging to several communication protocols chosen from a list consisting of HTTP, FTP, SNMP, MODBUS, UNI-TE, CANOpen, CAN, LON.

5. Access control system according to one of the above claims, wherein that the first communication network (30) is an IP network.

6. Access control system according to one of the above claims, wherein that the second communication network (10) is an IP network.

7. Access control system according to claim 6, wherein the second communication network (10) is an Intranet, Extranet or Internet type network.

8. Access control system according to one of the above claims, wherein the business functions are chosen from a list consisting of monitoring, instrumentation/control, programming of an automation equipment.

9. Access control system according to one of the above claims, wherein the functional profiles and the filter profiles are described in the XML language.

10. Access control system according to one of the above claims, wherein the system (20) uses a session security communication protocol of the SSL (Secure Socket Layer) type.

11. Access control system according to one of the above claims, wherein the filter means (25) measure an inactivity time specific to each identified user (16) and prohibit transmission of a frame sent by the said identified user (16) on the first communication network (30), after a maximum predetermined inactivity time (Tmax).

12. Access control system according to one of the above claims, wherein the system (20) is installed in a computer device (40) connected to the first network (30) and the second network (10).

13. Access control system according to claim 12, wherein the computer device (40) comprises an internal storage memory to save at least one functional profiles (42) library and at least one filter profiles (44) library.

14. Access control system according to claim 12, wherein the system comprises administration means (29) of the system (20) accessible from a man/machine interface (45) connected to the computer device (40).

15. Process for controlling access to one of several automation equipments (31,32,33) connected to a first communication network (30), from at least one client station (15) connected to a second communication network (10), wherein the process comprises:
- a step for identifying at least one user (16) of the client station (15),
- a step for determining a functional profile containing a list of business functions that the identified user (16) is authorised to carry out on the automation equipment (31,32,33),
- a step for analysing the content of a frame sent on the second communication network (10) by the identified user (16), in order to determine a request in the said frame together with a destination automation equipment,
- a step for defining a filter profile for the destination automation equipment, containing a list of requests that the destination equipment is capable of receiving, for each business function,
- a filter step for authorising or prohibiting transmission of said sent frame on the first communication network (30), according to said sent frame, said functional profile of the identified user (16) and said filter profile of the destination equipment.

## Patentansprüche

1. Zugangskontrollsystem für eine oder mehrere Automatikausstattungen (31, 32, 33), die an ein erstes Kommunikationsnetz (30) angeschlossen sind, ausgehend von mindestens einem Client-Posten (15), der an ein zweites Kommunikationsnetz (10) angeschlossen ist, **dadurch gekennzeichnet, dass** das System (20) Folgendes aufweist:
- Mittel (21) zum Identifizieren mindestens eines Benutzers (16) des Client-Postens (15),
- Mittel (22) zum Bestimmen eines Funktionsprofils, das eine Liste von Gewerbefunktionen enthält, zu deren Ausführen der identifizierte Benutzer (16) auf der oder den Automatikausstattungen (31, 32, 33) befugt ist,
- Mittel (23) zum Analysieren des Inhalts eines Rahmens, der auf dem zweiten Netz (10) von dem identifizierten Benutzer (16) gesendet wird, um in dem Rahmen eine Anfrage und eine Ziel-Automatikausstattung zu bestimmen,
- Mittel (24) zum Definieren eines Filterprofils der Ziel-Automatikausstattung, das für jede Gewerbefunktion eine Liste der für die Empfangsausstattung zulässigen Anfragen enthält,
- Filtermittel (25), die das Übertragen auf dem ersten Netz (30) des gesendeten Rahmens in Abhängigkeit von dem Inhalt des Rahmens, dem Funktionsprofil des identifizierten Benutzers (16) und dem Filterprofil der Zielausstattung gestatten oder verbieten können.

2. Zugangskontrollsystem nach Anspruch 1, **dadurch gekennzeichnet, dass** die Mittel (22) zum Bestimmen eines Funktionsprofils mindestens eine Bibliothek von Funktionsprofilen (42, 42') verwenden, die für das System (20) zugänglich ist.

3. Zugangskontrollsystem nach Anspruch 1 oder 2, **dadurch gekennzeichnet, dass** die Mittel (24) zum Definieren eines Filterprofils mindestens eine Filterprofilbibliothek (44, 44', 44") verwenden, die für das System (20) zugänglich ist und für einen bestimmten Automatikausstattungstyp und für eine bestimmte Gewerbefunktion eine Liste zulässiger Anfragen, die zu einem oder mehreren Kommunikationsprotokollen gehören, gibt.

4. Zugangskontrollsystem nach Anspruch 3, **dadurch gekennzeichnet, dass** die Filterprofilbibliothek Anfragen aufweist, die zu mehreren Kommunikationsprotokollen gehören, die aus einer Liste ausgewählt werden, die aus HTTP, FTP, SNMP, MODBUS, UNI-TE, CANOpen, CAN, LON besteht.

5. Zugangskontrollsystem nach einem der vorhergehenden Ansprüche, **dadurch gekennzeichnet, dass** das erste Kommunikationsnetz (30) ein IP-Netz ist.

6. Zugangskontrollsystem nach einem der vorhergehenden Ansprüche, **dadurch gekennzeichnet, dass** das zweite Kommunikationssystem (10) ein IP-Netz ist.

7. Zugangskontrollsystem nach Anspruch 6, **dadurch gekennzeichnet, dass** das zweite Kommunikationsnetz (10) ein Netz des Typs Intranet, Extranet oder Internet ist.

8. Zugangskontrollsystem nach einem der vorhergehenden Ansprüche, **dadurch gekennzeichnet, dass** die Gewerbefunktionen aus einer Liste ausgewählt werden, die aus den Funktionen Überwachung, Kontrolle/Steuerung, Programmieren einer Automatikausstattung besteht.

9. Zugangskontrollsystem nach einem der vorhergehenden Ansprüche, **dadurch gekennzeichnet, dass** die Funktionsprofile und die Filterprofile in der Sprache XML geschrieben sind.

10. Zugangskontrollsystem nach einem der vorhergehenden Ansprüche, **dadurch gekennzeichnet, dass** das System (20) ein Absicherungsprotokoll der Kommunikationssessions des Typs SSL verwendet.

11. Zugangskontrollsystem nach einem der vorhergehenden Ansprüche, **dadurch gekennzeichnet, dass** die Filtermittel (25) eine Inaktivitätszeit für einen identifizierten Benutzer (16) messen und das Übertragen auf dem ersten Kommunikationsnetz (30) eines von dem identifizierten Benutzer (16) gesendeten Rahmens nach einer vorbestimmten maximalen Inaktivitätszeit (Tmax) verbieten.

12. Zugangskontrollsystem nach einem der vorhergehenden Ansprüche, **dadurch gekennzeichnet, dass** das System (20) in einem EDV-Gerät (40) untergebracht ist, das an das erste Netz (30) und an das zweite Netz (10) angeschlossen ist.

13. Zugangskontrollsystem nach Anspruch 12, **dadurch gekennzeichnet, dass** das EDV-Gerät (40) einen internen Speicher zum Speichern mindestens einer Funktionsprofilbibliothek (42) und mindestens einer Filterprofilbibliothek (44) aufweist.

14. Zugangskontrollsystem nach Anspruch 12, **dadurch gekennzeichnet, dass** das System Verwaltungsmittel (29) des Systems (20) aufweist, die ausgehend von einer Benutzer-/Maschinenschnittstelle (45), die an das EDV-System (40) angeschlossen ist, zugänglich sind.

15. Zugangskontrollverfahren zu einer oder mehreren Automatikausstattungen (31, 32, 33), die an ein erstes Kommunikationsnetz (30) angeschlossen sind, ausgehend von mindestens einem Client-Posten (15), der an ein zweites Kommunikationsnetz (10) angeschlossen ist, **dadurch gekennzeichnet, dass** es Folgendes aufweist:
- einen Identifikationsschritt mindestens eines Benutzers (16) des Client-Postens (15),
- einen Schritt des Bestimmens eines Funktionsprofils, das eine Liste von Gewerbefunktionen enthält, zu deren Ausführen der identifizierte Benutzer (16) auf der oder den Automatikausstattungen (31, 32, 33) befugt ist,
- einen Schritt des Analysierens des Inhalts eines Rahmens, der auf dem zweiten Kommunikationsnetz (10) von dem identifizierten Benutzer (16) gesendet wird, um in dem Rahmen eine Anfrage und eine Ziel-Automatikausstattung zu bestimmen,
- einen Schritt des Definierens eines Filterprofils der Ziel-Automatikausstattung, das für jede Gewerbefunktion eine Liste der von der Ziel-Automatikausstattung zulässigen Anfragen enthält,
- einen Filterschritt, der es erlaubt, das Übertragen auf dem ersten Kommunikationsnetz (30) des gesendeten Rahmens in Abhängigkeit von dem Inhalt des Rahmens, dem Funktionsprofil des identifizierten Benutzers (16) und dem Filterprofil der Ziel-Automatikausstattung zu gestatten oder verbieten.
